# EUROPÄISCHE PATENTSCHRIFT

(11) **EP 1 614 948 B1**
(45) Veröffentlichungstag und Bekanntmachung des Hinweises auf die Patenterteilung: **29.08.2007**
(21) Anmeldenummer: 05014519.2
(22) Anmeldetag: 05.07.2005
(51) Int. Cl.: F16K 47/12

(54) **Ventil**
Valve
Soupape

(30) Priorität: 05.07.2004 DE 102004032584
(43) Veröffentlichungstag der Anmeldung: 11.01.2006
(73) Patentinhaber: Friatec Aktiengesellschaft, 68229 Mannheim (DE)
(72) Erfinder: Maier, Fabian, 67368 Westheim (DE)
(74) Vertreter: Tönhardt, Marion

(56) Entgegenhaltungen:
- DE-C- 500 753
- FR-A- 2 715 208
- GB-A- 191 415 970
- US-A- 4 114 816

## Beschreibung

Die Erfindung betrifft ein Ventil, das aus einer Offenstellung in eine Schließstellung und zurück bewegbar ist, mit einem Ventilkörper, dessen Basis an die Innenkontur einer Leitung angepaßt ist und der ein spiralig ausgebildetes Gewölbe aufweist.

Die Anwendungsweise solcher Ventile ist offensichtlich. Besondere Probleme stellen sich, wenn beispielsweise große Rohrdurchmesser überbrückt werden müssen. Dann ergibt sich auch die Schwierigkeit, daß der Fließwiderstand so groß wird, daß ein definiertes Schließ- und Öffnungsverhalten des Ventils nicht mehr gewährleistet ist.

Ein Ventil der eingangs genannten Gattung ist beispielsweise aus der GB 15 970 A A.O. 1914 bekannt. Das kegelig ausgebildete Gewölbe kann mittels einer Auslösestange, die von außen betätigbar ist, aus einer Offen- in eine Schließstellung gebracht werden.

Ein ähnliches Ventil ist in der DE 500 753 C gezeigt, hier unter anderem mit einem kugelabschnittsartigen Gewölbe des Basiskörpers. Bei einigen Varianten ist ein stangenartiges Auslöseelement vorgesehen, welches, ähnlich wie bei der GB 15 970 A, AO 1914, von außen betätigbar ist.

Weitere Ventile der eingangs genannten Gattung sind in der US 4 114 816 und in der FR 2 715 208 A beschrieben.

Es ist die Aufgabe der vorliegenden Erfindung, ein Ventil der obengenannten Gattung zur Verfügung zu stellen, mit dem große Rohrdurchmesser sicher geschlossen werden können.

Diese Aufgabe wird durch ein Ventil nach Anspruch 1 gelöst. Vorteilhafte Ausgestaltungen sind Gegenstand der Unteransprüche.

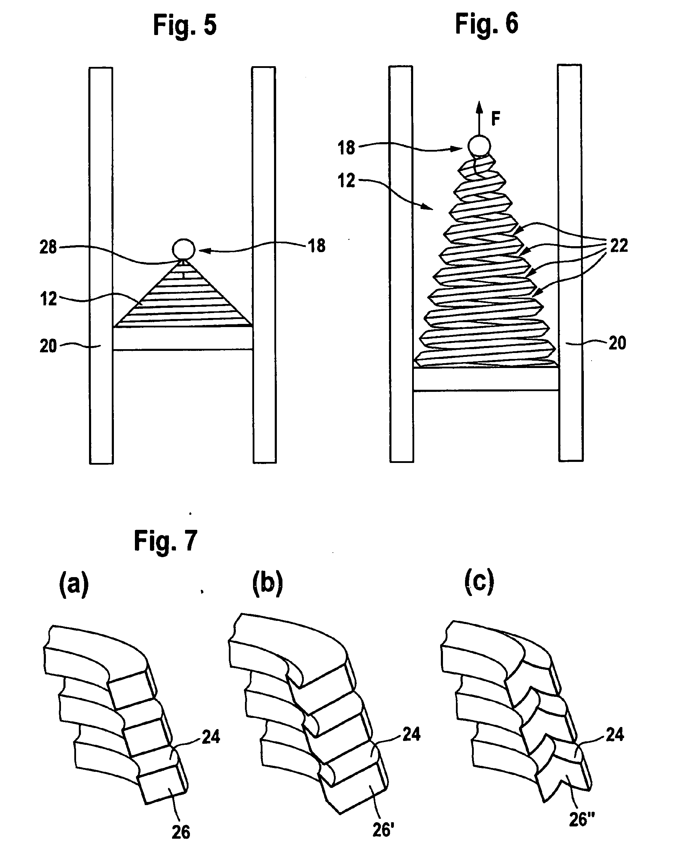

Erfindungsgemäß ist vorgesehen, der Querschnitt des Spiralenstranges des Ventilkörpers so gewählt ist, daß übereinanderliegende Gänge des Spiralenstranges in der Schließstellung ineinandergreifen. Das erfindungsgemäße Ventil arbeitet in effektiver Weise dadurch, daß sein Querschnitt gleichmäßig geöffnet oder geschlossen wird. Durch den spiralartigen Schnitt wird die Durchtrittsöffnung maximal, so daß ein geringer Fließwiderstand vorliegt. Durch die Stützwirkung der spiraligen aufeinanderliegenden Segmente sind große Durchmesser von Leitungen überbrückbar. Dieses Wirkprinzip ist mit einem Gewölbekeller vergleichbar. Über den Kegelwinkel bzw. die Steigung der Spirale ist das Anspringverhalten des Ventils einstellbar. Durch die Ausgestaltung des Profils des Spiralenstranges des Ventilkörpers kann der Strömungswiderstand und somit das Betriebsverhalten des Ventils eingestellt werden. Durch Auswahl des Profils kann die Stützwirkung der übereinanderliegenden Gänge des Spiralenstranges verbessert werden. In der Offenstellung wird dann die Durchströmöffnung entsprechend verändert, wobei durch die gewählte Ausformung, beispielsweise mit J-förmigem oder V-förmigem Querschnitt des Spiralenstranges der Strömungswiderstand erhöht wird. "Querschnitt des Spiralenstranges" bedeutet dabei die Schnittebene senkrecht zur Achse des augerollten Spiralenstranges, wie es im Zusammenhang mit Figur 7 veranschaulicht wird.

Unter "Gewölbe" sollen domartige Strukturen verstanden werden. Nach einer ersten Ausgestaltung kann das Gewölbe ein kegelartiges Gewölbe sein, es ist aber ebenso vorteilhaft, wenn das Gewölbe ein kugelabschnittsartiges Gewölbe ist.

Weiter vorteilhaft ist ein Auslöseelement vorgesehen, daß bevorzugt am Zenit des Gewölbes angebracht ist. Dieses Auslöseelement soll das Ventil in die Offenstellung bringen.

Das Auslöseelement kann durch eine an ihm angebrachte Feder betätigbar sein. Mit separater Feder am Auslöseelement ist das Ventil als Gasstromwächter einsetzbar.

Bevorzugt ist die Feder in der Symmetrieachse der Konkavität des Gewölbes angeordnet.

Es liegt im Rahmen der Erfindung, daß der Ventilkörper selbst als Feder, welche die Auslösung direkt steuert, dient.

Um das erfindungsgemäße Ventil als Wächter, insbesondere Gaswächter, nutzen zu können, muß es den entsprechenden Betriebsbedingungen, wie Druck, Fließgeschwindigkeit usw., angepaßt werden.

Grundsätzlich kann durch den Einsatz unterschiedlicher Materialien bereits Einfluß auf die Steifigkeit genommen werden. So ist vorteilhaft das spiralig ausgebildete Gewölbe aus Metall oder aus Kunststoff, beispielsweise Polypropylen, Polyethylen, Polyamid oder dergleichen, hergestellt. Es ist möglich, dem Kunststoff Füllstoffe, wie Glasfaser, Ruß oder dergleichen, beizufügen, damit die gewünschten Federeigenschaften des Ventilkörpers erhalten werden.

In einer Ausgestaltung der Erfindung ist der Querschnitt des Spiralenstranges über zumindest ein Teil seiner Länge konstant. Es kann aber auch gefordert sein, daß das Ventil über seine axiale Länge eine etwa gleichförmige Biegesteifigkeit aufweist. In diesem Fall kann vorgesehen werden, daß der Querschnitt des Spiralenstranges von der Basis zum Zenit des Gewölbes abnimmt. Die Dicke des Spiralenstranges wird daher bei abnehmendem Umfang des Ventilkörpers geringer.

Auch kann vorgesehen sein, daß die im spiralig ausgebildeten Gewölbe in Offenstellung vorhandene Durchströmöffnung in der Offenstellung teilweise verschlossen bleibt oder verschließbar ist. Dies kann beispielsweise erreicht werden, indem bereits bei der Herstellung nur ein Abschnitt des Ventilkörpers spiralig geschnitten wird. Es kann aber auch vorgesehen sein, nachträglich ein Abdeckelement aufzubringen.

Ein solches Abdeckelement kann mehr oder wenig eng am Ventilkörper anliegen und so für eine Erhöhung des Staudruckes sorgen. Damit kann der Strömungswiderstand eingestellt werden, was sich auf die Schließeigenschaften des Ventils auswirkt.

Eine herstellungstechnische Vereinfachung ergibt sich, wenn das Abdeckelement bezüglich der Längsachse des Ventilkörpers asymmetrisch ausgebildet ist. Durch Drehen des Abdeckelementes können eventuelle Fertigungstoleranzen ausgeglichen bzw. Betriebsbereiche feinjustiert werden. Anschließend wird das asymmetrische Abdeckelement mit dem Ventilkörper verschweißt.

Schließlich kann es sinnvoll sein, in das Abdeckelement eine Dichtung einzubringen. Damit kann das Abdeckelement auch als Abschlußkörper genutzt werden.

Ein weiterer Vorteil der Verwendung von Abdeckelementen ist der Schutz vor Verunreinigungen.

Im folgenden soll die Erfindung anhand der beigefügten Zeichnung näher erläutert werden. Es zeigt:
- Figur 1: ein Ventil nach einer bevorzugten Ausführungsform der Erfindung im geöffneten Zustand;
- Figur 2: eine perspektivische Ansicht des Ventils im geöffneten Zustand;
- Figur 3: eine Ansicht des Ventils im geschlossenen Zustand;
- Figur 4: eine perspektivische Ansicht des Ventils nach Figur 3;
- Figur 5: die Anordnung eines Ventils gemäß der vorliegenden Erfindung in einem Rohr; und
- Figur 6: das Ventil der Figur 5 in geöffnetem Zustand;
- Figur 7: in den Teilbildern (a), (b) und (c) verschiedene Ausgestaltungen des Querschnittsprofils des Spiralenstrangs;
- Figur 8: in Teilbildern (a) und (b) Ausführungsformen von Ventilen, mit denen die Einstellung der Biegesteifigkeit des Ventilkörpers veranschaulicht werden;
- Figur 9: eine Ausführungsform des erfindungsgemäßen Ventils mit reduzierter Durchströmöffnung;
- Figur 10: in Teilbildern (a) und (b) eine Ausführungsform eines Ventils mit Abdeckelement;
- Figur 11: eine Ausführungsform des Ventils mit asymmetrischem Abdeckelement; und
- Figur 12: eine Ausführungsform eines Ventils mit Abdeckelement, in das eine Dichtung eingebracht ist.

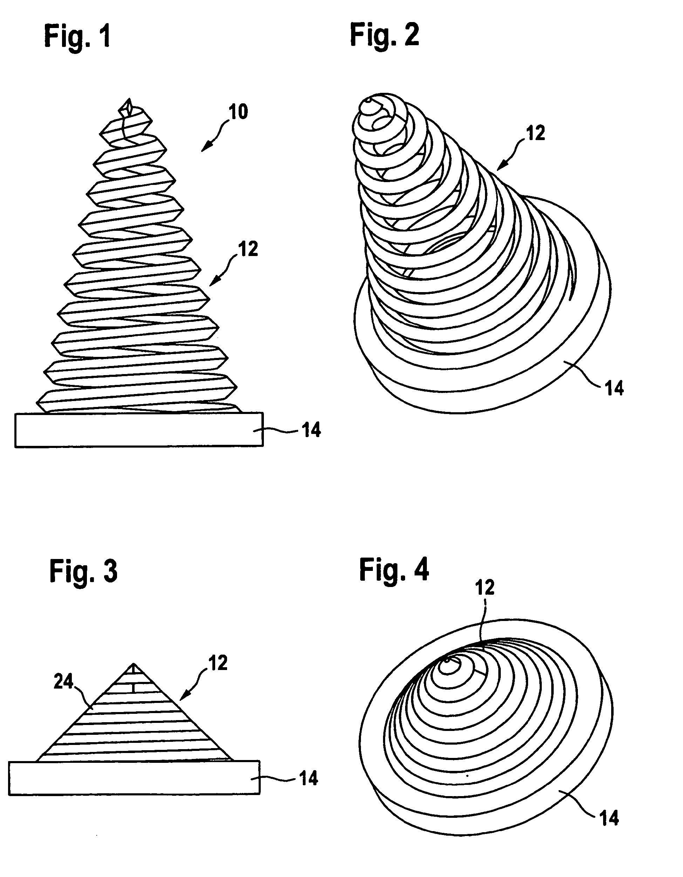

Figur 1 zeigt eine Ausführungsform eines Ventils gemäß der vorliegenden Erfindung, in geöffnetem Zustand, bei dem ein Ventilkörper 10, der aus einem spiralig geschnittenen Gewölbe 12 mit integriert angebrachter Basis 14 im Öffnungszustand dargestellt. Das Gewölbe 12 ist bei der hier gezeigten Ausführungsform kegelartig, es ist aber auch eine halbkugelartige Ausgestaltung oder eine kugelabschnittsartige Ausgestaltung, eine pyramidenartige Ausgestaltung und dergleichen denkbar. Über den Kegelwinkel und/oder die Steigung der Spirale des Gewölbes 12 ist das Anspringverhalten des Ventils einstellbar. Somit kann das erfindungsgemäße Ventil, auch wenn es als Gasstromwächter eingesetzt wird, für den besonderen Einsatzfall optimiert werden. Andere Einstellmöglichkeiten werden weiter unten erläutert.

Figur 2 zeigt das Ventil aus Figur 1 in perspektivischer Darstellung, wobei ersichtlich wird, daß der Querschnitt des Gewölbes 12 gleichmäßig geöffnet oder geschlossen werden kann. Dadurch wird die Betätigungskraft für das Ventil minimiert.

Figur 3 zeigt das Ventil in geschlossenem Zustand. Die aufeinanderliegenden Gänge des Spiralenstranges 24 des Gewölbes 12 in Form eines Kegels bewirken, daß diese sich gegeneinander abstützen, ähnlich einer Bauart eines Gewölbekellers.

Die perspektivische Ansicht der Figur 4 zeigt, wie im geschlossenen Zustand des Ventils die Spirale des Gewölbes 12 in sich geschlossen liegt und mit der Basis 14 für die Sperrung des Leitungsdurchmessers sorgt.

In Figur 5 ist das erfindungsgemäße Ventil in seiner kegelartigen Ausgestaltung in Einbauzustand in einem Rohr 20 gezeigt. Schematisch angedeutet am Zenit 28 des Gewölbes 12 ist ein Auslöseelement 18, an dem beispielsweise ein Stellglied angreift. Wenn am Auslöseelement 18 eine separate Feder angreift, ist das Ventil als Gasstromwächter einsetzbar. Es muß gewährleistet sein, daß, wie in Figur 6 dargestellt ist, am Auslöseelement 18 eine Kraft F in der durch den Pfeil angezeigten Richtung angreift. Dabei ist es unerheblich, ob diese Kraft F durch eine oberhalb des Auslöseelementes 18 angebrachte Feder oder durch eine innerhalb des Kegels bzw. Gewölbes angeordnete Feder hervorgerufen wird. Wichtig ist lediglich, daß das spiralig geschnittene Gewölbe 12 so auseinandergezogen wird, daß die spiralige Durchtrittsöffnung 22 möglichst gleichmäßig aufgeweitet wird. Der Ventilkörper selbst kann in fenstellung hergestellt werden und wirkt je nach Material und Ausführung als Feder. Eine zusätzliche Feder ist somit bei einer solchen Ausgestaltung überflüssig.

Figur 7 zeigt im Teilbild (a) in schematischer Weise drei übereinanderliegende Gänge des Spiralenstranges 24 eines Ventils, wobei bei dieser Ausgestaltung die Querschnittsfläche 26 des Spiralenstranges 24 rechteckig und über die axiale Länge des Ventilkörpers konstant ist. Der Fachmann erkennt, daß bei einer derartigen Ausgestaltung eine Verschiebung der Gänge des Spiralenstranges 24 gegeneinander möglich ist. In vielen Fällen ist dies nicht erwünscht. Daher kann es erfinderisch sein, wie im Teilbild (b) dargestellt, die Querschnittsfläche 26' unregelmäßig zu gestalten, beispielsweise in Form eines liegenden "J", so daß im geschlossenen Zustand des Ventils die Gänge des Spiralstranges 24 ineinandergreifen. In geöffnetem Zustand des Ventils muß das Medium einen Richtungswechsel in der Durchströmöffnung 22 vornehmen, so daß es hier zu einer Erhöhung des Strömungswiderstandes kommt. Eine weitere Ausgestaltung zeigt das Teilbild (c) mit einem Spiralenstrang 24, einen Querschnitt 26" der in Forme eines auf dem Kopf stehenden "V" gestaltet ist.

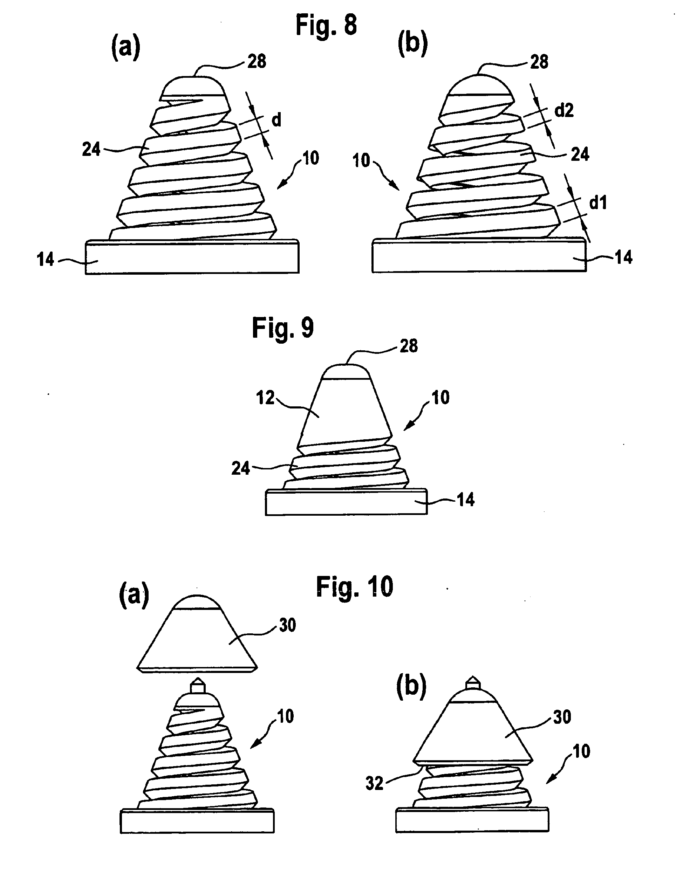

Figur 8 zeigt im Teilbild (a) eine Ausgestaltung des Ventils, bei der, beginnend bei der Basis 14, der Spiralenstrang 24 bis zum Zenit 28 einen konstanten Querschnitt aufweist, was in dieser Darstellung durch eine ebenso konstante Dicke d des Spiralenstranges 24 veranschaulicht wird. Wenn nun das Ventil bzw. genauer der Ventilkörper 10 über seine axiale Länge eine etwa konstante Biegesteifigkeit aufweisen soll, kann dies dadurch erreicht werden, daß, wie in Teilbild (b) dargestellt, der Spiralenstrang 24 an der Basis 14 eine größere Dicke d1 aufweist als in der Nähe des Zenits 28, wobei die Dicke d1 bei der hier dargestellten Ausführungsform kontinuierlich auf die Dicke d2 abnimmt. Die geringe Dicke gleicht damit den geringeren Umfang des Ventilkörpers 10 und damit die geringere wirksame Fläche aus.

Figur 9 zeigt eine Ausführungsform eines Ventils, bei dem der Ventilkörper 10 nur teilweise, nämlich in der Nähe der Basis 14, spiralig ausgebildet ist. Herstellungstechnisch kann dies erfolgen, indem beispielsweise aus dem Gewölbe 12 nur wenige Gänge des Spiralenstranges 24 ausgeschnitten werden. Der obere Bereich des Gewölbes 12 bleibt geschlossen. Der Spiralenstrang 24 kann in anderen Abschnitten des Gewölbes 12 ausgebildet sein, so daß es beispielsweise auch denkbar wäre, in der Nähe der Basis 4 das Gewölbe 12 geschlossen zu halten, während der Spiralenstrang 24 unterhalb des Zenites 28 geschnitten wird.

Dieselbe Wirkung wird mit einem nachträglich aufgebrachten Abdeckelement erreicht.

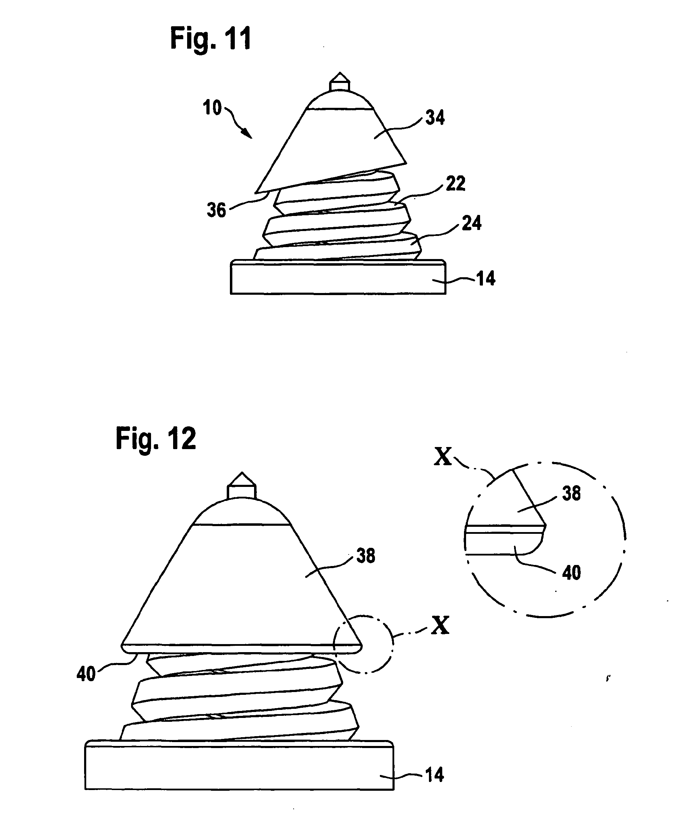

Figur 10 zeigt eine Ausführungsform eines Ventils, bei dem das Abdeckelement 30 auf den oberen Bereich des Ventilkörpers 10 aufgesetzt wird. Dabei verbleibt, wie besser im Teilbild (b) zu erkennen ist, ein Strömungsspalt 32 zwischen Abdeckelement 30 und Ventilkörper 10.

Das in Figur 11 dargestellte Abdeckelement 34 ist asymmetrisch ausgebildet, hier dadurch, daß die zur Basis 14 weisende Kante 36 des Abdeckelementes nicht parallel zur Basis 14 verläuft, sondern unter einem vorwählbaren Winkel. Dies entspricht auch einer Asymmetrie in bezug auf die Längsachse des Ventilkörpers, die senkrecht zur Basis 14 verläuft. Im Zusammenwirken mit der spiraligen Durchströmöffnung 22, die einen Steigungswinkel definiert, kann hier durch eine unterschiedliche Winkelstellung des Abdeckelementes 34 erreicht werden, so daß die Durchströmöffnung 22 in Teilbereichen mehr oder weniger verschlossen wird. Damit ist eine Feinjustierung der Betriebseigenschaften des Ventils möglich, auch können Fertigungstoleranzen ausgeglichen werden. Nachdem die optimale Position des Abdeckelementes 34 gefunden ist, wird dieses fest mit dem Ventilkörper verbunden, beispielsweise durch Verkleben oder Verschweißen bei mechanischer Verriegelung.

Figur 12 zeigt ein Ventil mit einem Abdeckelement 38, in das eine Dichtung eingebracht ist, hier in Form eines Dichtringes 40, welche zur Basis 14 des Ventils weist. Die Detailansicht "X" zeigt, wie der Dichtring 40 an das Abdeckelement 38 angesetzt ist.

Es soll verstanden werden, daß, obwohl die Erfindung mit Bezug auf ein kegelartiges Ventil beschrieben worden ist, auch andere gewölbeartige Ausgestaltungen von Ventilen bzw. deren Ventilkörpern umfaßt sind. Insbesondere können auch andere als kreisförmige Querschnitte, beispielsweise ovale, überbrückbar sein.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Ventil, das aus einer Offenstellung in eine Schließstellung und zurück bewegbar ist, mit einem Ventilkörper (10), dessen Basis (14) an die Innenkontur einer Leitung angepaßt ist und der ein spiralig ausgebildetes Gewölbe aufweist, **dadurch gekennzeichnet, daß** der Querschnitt (26', 26") des Spiralenstranges (24) des Ventilkörpers (10) so gewählt ist, daß übereinanderliegende Gänge des Spiralenstranges (24) in der Schließstellung des Ventils ineinandergreifen.

2. Ventil nach Anspruch 1, **dadurch gekennzeichnet, daß** das Gewölbe (12) ein kegelartiges Gewölbe ist.

3. Ventil nach Anspruch 1, **dadurch gekennzeichnet, daß** das Gewölbe (12) ein kugelabschnittsartiges Gewölbe ist.

4. Ventil nach einem der Anspruch 1 bis 3, **dadurch gekennzeichnet, daß** am Zenit des Gewölbes (12) ein Auslöseelement (18) angebracht ist, welches das Ventil in die Offenstellung bzw. Schließstellung bringt.

5. Ventil nach Anspruch 4, **dadurch gekennzeichnet, daß** das Auslöseelement (18) durch eine an ihm angebrachte Feder betätigbar ist.

6. Ventil nach Anspruch 4, **dadurch gekennzeichnet, daß** der Ventilkörper die Feder darstellt.

7. Ventil nach Anspruch 5, **dadurch gekennzeichnet, daß** die Feder in der Symmetrieachse der Konkavität des Gewölbes (12) angeordnet ist.

8. Ventil nach einem der Ansprüche 1 bis 7, **dadurch gekennzeichnet, daß** das spiralig ausgebildete Gewölbe (12) aus Metall oder Kunststoff, beispielsweise Polypropylen, Polyethylen, Polyamid oder dergleichen, hergestellt ist.

9. Ventil nach Anspruch 8, **dadurch gekennzeichnet, daß** der Kunststoff Füllstoffe, wie Glasfaser, Ruß oder dergleichen, enthält.

10. Ventil nach Anspruch 1, **dadurch gekennzeichnet, daß** der Querschnitt (26, 26', 26") des Spiralenstranges (24) über zumindest einen Teil seiner Länge konstant ist.

11. Ventil nach Anspruch 1, **dadurch gekennzeichnet, daß** der Querschnitt des Spiralenstranges (24) von der Basis (14) zum Zenit (28) des Gewölbes (12) abnimmt.

12. Ventil nach Anspruch 1, **dadurch gekennzeichnet, daß** die im spiralig ausgebildeten Gewölbe (1) in Offenstellung vorhandene Durchströmöffnung (22) in der Offenstellung des Ventils teilweise verschlossen bleibt oder verschließbar ist.

13. Ventil nach einem der vorangehenden Ansprüche, **dadurch gekennzeichnet, daß** zumindest ein Teil des spiralig ausgebildeten Gewölbes (12) mit einem Abdeckelement (30, 34, 38) versehen ist.

14. Ventil nach Anspruch 13, **dadurch gekennzeichnet, daß** das Abdeckelement (34) bezüglich des Längsachse des Ventilkörpers (10) asymmetrisch ausgebildet ist.

15. Ventil nach Anspruch 13, **dadurch gekennzeichnet, daß** in das Abdeckelement (38) eine Dichtung (40) eingebracht ist.

## Claims

1. Valve which is moveable from an open position into a closed position and back, with a valve body (10), the base (14) of which is adapted to the internal contour of a pipe and which has a helical arch, **characterised in that** the cross-section (26', 26") of the helix (24) of the valve body (10) is selected such that superimposed threads of the helix (24) interlock with each other when the valve is in the closed position.

2. Valve according to claim 1, **characterised in that** the arch (12) is a conical arch.

3. Valve according to claim 1, **characterised in that** the arch (12) is an arch in the form of a conical section.

4. Valve according to one of claims 1 to 3, **characterised in that** a trigger element (18) is arranged at the vertex of the arch (12), said element bringing the valve into the respective open or closed position.

5. Valve according to claim 4, **characterised in that** the trigger element (18) can be actuated by a spring attached thereto.

6. Valve according to claim 4, **characterised in that** the valve body acts as the spring.

7. Valve according to claim 5, **characterised in that** the spring is arranged in the axis of symmetry of the concavity of the arch (12).

8. Valve according to one of claims 1 to 7, **characterised in that** the helical arch (12) is made from metal or plastic, for example polypropylene, polyethylene, polyamide or similar.

9. Valve according to claim 8, **characterised in that** the plastic contains fillers, such as glass fibres, carbon black or similar.

10. Valve according to claim 1, **characterised in that** the cross-section (26, 26', 26") of the helix (24) is constant over at least part of its length.

11. Valve according to claim 1, **characterised in that** the cross-section of the helix (24) reduces from the base (14) towards the vertex (28) of the arch (12).

12. Valve according to claim 1, **characterised in that** the throughflow opening (22) which exists when the helical arch (1) [sic] is in the open position remains partially closed or is closable when the valve is in the open position.

13. Valve according to one of the preceding claims, **characterised in that** at least part of the helical arch (12) is provided with a covering element (30, 34, 38).

14. Valve according to claim 13, **characterised in that** the covering element (34) is asymmetrical in shape with respect to the longitudinal axis of the valve body (10),

15. Valve according to claim 13, **characterised in that** a gasket (40) is inserted into the covering element (38).

## Revendications

1. Soupape pouvant être amenée depuis une position ouverte vers une position fermée et inversement, comprenant un corps de soupape (10) dont la base (14) est adaptée au contour intérieur d'une conduite et qui présente une voûte réalisée en forme de spirale, **caractérisée en ce que** la section (26', 26") du brin spiralé (24) du corps de la soupape (10) est choisie de telle sorte que les passages superposés du brin spiralé (24) s'engagent les uns dans les autres dans la position fermée de la soupape.

2. Soupape selon la revendication 1, **caractérisée en ce que** la voûte (12) est une voûte de type conique.

3. Soupape selon la revendication 1, **caractérisée en ce que** la voûte (12) est une voûte en forme de segment sphérique.

4. Soupape selon l'une des revendications 1 à 3, **caractérisée en ce qu'**un élément de déclenchement (18) qui amène la soupape dans la position ouverte ou la position fermée est fixé sur le sommet de la voûte (12)

5. Soupape selon la revendication 4, **caractérisée en ce que** l'élément de déclenchement (18) peut être actionné au moyen d'un ressort installé sur lui.

6. Soupape selon la revendication 4, **caractérisée en ce que** le corps de la soupape constitue le ressort.

7. Soupape selon la revendication 5, **caractérisée en ce que** le ressort est agencé dans l'axe de symétrie de la concavité de la voûte (12).

8. Soupape selon l'une des revendications 1 à 7, **caractérisée en ce que** la voûte réalisée en forme de spirale (12) est fabriquée en métal ou en matériau plastique, par exemple un polypropylène, un polyéthylène, un polyamide ou un matériau similaire.

9. Soupape selon la revendication 8, **caractérisée en ce que** le matériau plastique contient une charge telle que des fibres de verre, de la suie ou des matières similaires.

10. Soupape selon la revendication 1, **caractérisée en ce que** la section (26, 26', 26") du brin spiralé (24) est constante sur au moins une partie de sa longueur.

11. Soupape selon la revendication 1, **caractérisée en ce que** la section du brin spiralé (24) diminue depuis la base (14) vers le sommet (28) de la voûte (12).

12. Soupape selon la revendication 1, **caractérisée en ce que** l'ouverture de circulation (22) présente dans la position ouverte dans la voûte réalisée en forme de spirale (1) reste partiellement fermée ou peut être fermée dans la position ouverte de la soupape.

13. Soupape selon l'une des revendications précédentes, **caractérisée en ce qu'**au moins une partie de la voûte réalisée en forme de spirale (12) est munie d'un élément de couverture (30, 34, 38).

14. Soupape selon la revendication 13, **caractérisée en ce que** l'élément de couverture (34) est réalisé de façon asymétrique par rapport à l'axe longitudinal du corps de la soupape (10).

15. Soupape selon la revendication 13, **caractérisée en ce qu'**un joint d'étanchéité (40) est installé dans l'élément de couverture (38).
